# EUROPEAN PATENT APPLICATION

(11) **EP 3 636 433 A1**
(43) Date of publication of application: **15.04.2020**
(21) Application number: 18813159.3
(22) Date of filing: 24.05.2018
(51) Int. Cl.: B32B 27/32, B32B 7/06, B32B 27/00, B32B 27/12, B65D 65/40

(54) **EASILY UNSEALABLE LAMINATE FILM AND PACKAGING CONTAINER**

(30) Priority: 08.06.2017 JP 2017113410
(71) Applicant: DIC Corporation, Tokyo 174-8520 (JP)
(72) Inventor: KABURAGI, Yuki, Kitaadachi-gun Saitama 362-8577 (JP); KONEMURA, Younosuke, Kitaadachi-gun Saitama 362-8577 (JP); MORIYA, Takashi, Kitaadachi-gun Saitama 362-8577 (JP)
(74) Representative: Beckmann, Claus
(86) International application number: PCT/JP2018/019965
(87) International publication number: WO 2018/225521

(57) **Abstract**

An easily unsealable laminate film for use in bonding of a resin-based nonwoven fabric includes: a heat-seal layer (A) as one superficial layer to be bonded to the resin-based nonwoven fabric; an interlayer (B) that is laminated on the heat-seal layer (A) and includes, as resin components, an ethylene-based resin (b1) with a melt flow rate of 5 g to 50 g/10 min at 190°C and a butene-based resin (b2); and a surface layer (C) as another superficial layer, wherein the resin components in the interlayer (B) have an ethylene-based resin (b1) content of 50 mass% to 80 mass% and a butene-based resin (b2) content of 20 mass% to 50 mass%. The easily unsealable laminate film can achieve preferred easy unsealability and a high sealing strength at a high temperature.

## Description

### Technical Field

The present invention relates to an easily unsealable laminate film for use in adhesion with respect to a resin-based nonwoven fabric.

### Background Art

From the related art, a container in which an opening portion of a resin container including the opening portion is sealed with a sheet-like material has been used as a packaging container of a medical device, sanitary goods, or the like. In such a packaging container, in a case where a sterilization treatment is performed with respect to the content after packaging, a material having air permeability is used in the sheet-like material.

For example, an easily unsealable coextruded composite film in which a fiber assembly is laminated on a sealant layer of a film including a base material layer, an interlayer, and a sealant layer is disclosed as the sheet-like material that is used in such a packaging container (refer to PTL 1).

### Citation List

### Patent Literature

PTL 1: JP-A-2012-116061

### Summary of Invention

### Technical Problem

It is disclosed that in the coextruded composite film described above, a resin such as polyethylene having a specific melt flow rate, or polybutene is used in the sealant layer or the interlayer, and the content of polyethylene and polybutene in the interlayer is set in a specific range, and thus, the coextruded composite film has preferred easy peelability that does not cause cobwebbing or the like at the time of peeling.

However, in the packaging container of the medical device, the sanitary goods, or the like, in the case of using the material having air permeability, it is necessary to prevent not only the occurrence of the cobwebbing in the resin at the time of peeling, but also contamination with flakes caused by flaking from the material having air permeability. In addition, preferred peelability described above, and preferred sealing properties at the time of sealing have been required.

An object of the invention is to provide an easily unsealable laminate film having preferred heat-sealing properties, and preferred easy peelability that does not cause cobwebbing or flaking at the time of peeling.

### Solution to Problem

The invention attains the object by an easily unsealable laminate film for use in bonding of a resin-based nonwoven fabric, including: a heat-seal layer (A) as one superficial layer to be bonded to the resin-based nonwoven fabric; an interlayer (B) that is laminated on the heat-seal layer (A) and includes, as resin components, an ethylene-based resin (b1) with a melt flow rate of 5 g to 50 g/10 min at 190°C and a butene-based resin (b2); and a surface layer (C) as another superficial layer, in which the resin components in the interlayer (B) have an ethylene-based resin (b1) content of 50 mass% to 80 mass% and a butene-based resin (b2) content of 20 mass% to 50 mass%.

### Advantageous Effects of Invention

In the easily unsealable laminate film of the invention, the interlayer (B) containing the ethylene-based resin having a specific MFR and the butene-based resin is used on the heat-seal layer (A) between the heat-seal layer (A) and the surface layer (C), and thus, preferred easy peelability can be achieved by the interlayer (B) even at the time of performing heat-sealing that is capable of achieving preferred sealing properties by using the resin-based nonwoven fabric. For this reason, the easily unsealable laminate film of the invention can be preferably used in the adhesion of the resin-based nonwoven fabric, in a packaging container of a medical device, sanitary goods, or the like.

### Description of Embodiments

The invention is directed to an easily unsealable laminate film for use in bonding of a resin-based nonwoven fabric, including: a heat-seal layer (A) as one superficial layer to be bonded to the resin-based nonwoven fabric; an interlayer (B) that is laminated on the heat-seal layer (A) and includes, as resin components, an ethylene-based resin (b1) with a melt flow rate of 5 g to 50 g/10 min at 190°C and a butene-based resin (b2); and a surface layer (C) as another superficial layer, wherein the resin components in the interlayer (B) have an ethylene-based resin (b1) content of 50 mass% to 80 mass% and a butene-based resin (b2) content of 20 mass% to 50 mass%.

### [Heat-seal layer (A)]

The heat-seal layer (A) in the easily unsealable laminate film of the invention is a layer that is one superficial layer of the easily unsealable laminate film, and is a layer that adheres to an adherend such as the resin-based nonwoven fabric used in a packaging container. It is preferable that a resin used in the heat-seal layer (A) contains a polyolefin-based resin as a main resin component, from the viewpoint of easily obtaining cohesiveness with respect to the adherend.

An ethylene-based resin, a propylene-based resin, or the like can be suitably used as the polyolefin-based resin used in the heat-seal layer (A). In particular, it is preferable to contain the ethylene-based resin as a main resin component, from the viewpoint of excellent cohesiveness with respect to the resin-based nonwoven fabric. A polyethylene resin such as ultralow-density polyethylene (VLDPE), linear low-density polyethylene (LLDPE), low-density polyethylene (LDPE), linear medium-density polyethylene (LMDPE), and medium-density polyethylene (MDPE), or an ethylene-based copolymer such as an ethylene-vinyl acetate copolymer (EVA), an ethylene-methyl methacrylate copolymer (EMMA), an ethylene-ethyl acrylate copolymer (EEA), an ethylene-methyl acrylate (EMA) copolymer, an ethylene-ethyl acrylate-maleic anhydride copolymer (E-EA-MAH), an ethylene-acrylic acid copolymer (EAA), and an ethylene-methacrylic acid copolymer (EMAA); an ionomer of an ethylene-acrylic acid copolymer, an ionomer of an ethylene-methacrylic acid copolymer, and the like can be exemplified as the ethylene-based resin. Only one type of such ethylene-based resins may be used, or two or more types thereof may be used by being mixed.

In particular, it is possible to preferably use the ultralow-density polyethylene, the linear low-density polyethylene, the low-density polyethylene, and the linear medium-density polyethylene, from the viewpoint of easily obtaining preferred sealing properties, and the low-density polyethylene is particularly preferable from the viewpoint of easily cutting the seal layer at the time of peeling.

The MFR of the ethylene-based resin used in the heat-seal layer (A) is preferably 5 g to 50 g/10 min, and is more preferably 7 g to 35 g/10 min. By using such an ethylene-based resin, the cohesiveness with respect to the adherend at the time of heat-sealing is easily obtained, and it is possible to improve rupture resistance of the nonwoven fabric surface by infiltrating the ethylene-based resin into the fibers of the nonwoven fabric surface, and thus, flaking at the time of peeling is easily suppressed.

The density of the ethylene-based resin used in the heat-seal layer (A) is preferably 0.89 g/cm³ to 0.945 g/cm³, and is more preferably 0.91 g/cm³ to 0.935 g/cm³. By using such an ethylene-based resin, the cohesiveness with respect to the adherend at the time of heat-sealing is easily obtained, and the flaking at the time of peeling is easily suppressed.

In the heat-seal layer (A), the content of the polyolefin-based resin is preferably 60 mass% or more, is more preferably 80 mass% or more, and is even more preferably 90 mass% or more, with respect to the total amount of the resin component forming the layer, from the viewpoint of easily obtaining preferred cohesiveness with respect to the adherend. In particular, only the polyolefin-based resin is contained as the resin component, and the content of the ethylene-based resin in the resin component is preferably 60 mass% or more, is more preferably 80 mass% or more, and is even more preferably 90 mass% or more.

For example, a polyolefin-based resin and the like other than the ethylene-based resin can be exemplified, and a propylene-based resin such as a propylene homopolymer, a propylene-ethylene copolymer, a propylene-butene-1 copolymer, a propylene-ethylene-butene-1 copolymer, and metallocene catalyst-based polypropylene can be exemplified, as resins used in the heat-seal layer (A), other than the ethylene-based resin.

In the case of using the other resins as described above, the content of the other resins in the resin component contained in the heat-seal layer (A) is preferably 40 mass% or less, is more preferably 20 mass% or less, and is more preferably 10 mass% or less. In addition, a lower limit is not particularly limited, but the other resins may be suitably used at a content of 1 mass% or more, in accordance with desired properties.

In addition, the MFR of the resin composition containing the resin used in the heat-seal layer (A) is preferably 5 g to 50 g/10 minutes (190°C and 21.18 N), and is more preferably 7 g to 35 g/10 minutes. It is preferable that the MFR is within the range described above since excellent film formability can be obtained in various multi-layer formation methods.

In the heat-seal layer (A), various additives may be blended within a range not impairing the effects of the invention. An antioxidant, a weathering stabilizer, an antistatic agent, an anti-fogging agent, an anti-blocking agent, a lubricant, a nucleating agent, a pigment, and the like can be exemplified as the additive.

### [Interlayer (B)]

The interlayer (B) of the easily unsealable laminate film of the invention is a layer that is directly laminated on the heat-seal layer (A) described above. The interlayer (B) contains the ethylene-based resin (b1) of which the melt flow rate (MFR) at 190°C is 7 g to 40 g/10 min or more, and the butene-based resin (b2), as a resin component, and in the resin component, the content of the ethylene-based resin (b1) is 50 mass% to 80 mass%, and the content of the butene-based resin (b2) is 20 mass% to 50 mass%. In the invention, even when an excellent sealing strength is ensured, it is possible to achieve preferred easy peelability by using the interlayer (B) .

The MFR of the ethylene-based resin (b1) used in the invention may be 5 g to 50 g/10 minutes (190°C and 21.18 N), is preferably 6 g to 40 g/10 minutes, and is more preferably 7 g to 35 g/10 minutes . By setting the MFR of the ethylene-based resin to be within the range described above, when the heat-seal layer follows the irregularities of the nonwoven fabric surface, the interlayer is also capable of effortlessly following the irregularities, and the function of the interlayer can be maintained, and thus, it is possible to achieve preferred easy peelability.

Any ethylene-based resin can be used as the ethylene-based resin (b1) without any particular limitation, insofar as the ethylene-based resin has the MFR described above, and for example, the ethylene-based resin exemplified in the heat-seal layer (A) described above can be preferably used. In particular, linear low-density polyethylene (LLDPE), low-density polyethylene (LDPE), and the like can be preferably used since such ethylene-based resins are capable of forming a sea-island structure with the butene-based resin, and of achieving a suitable sealing strength.

The density of the ethylene-based resin (b1) is preferably 0.89 g/cm³ to 0.945 g/cm³, and is more preferably 0.91 g/cm³ to 0.935 g/cm³. By using such an ethylene-based resin, it is possible to have a suitable mechanical strength, and to achieve preferred cohesiveness between the heat-seal layer (A) and the surface layer (C).

The butene-based resin (b2) is contained as the resin component of the interlayer (B), along with the ethylene-based resin (b1) described above. A butene-containing copolymer such as an ethylene-1-butene copolymer or a 1-butene-ethylene copolymer, and a propylene-1-butene copolymer or a 1-butene-propylene copolymer, and a homopolymer of a 1-butene monomer can be preferably used as the butene-based resin (b2) .

The MFR of the butene-based resin (b2) is preferably 0.1 g to 50 g/10 minutes (190°C and 21.18 N), and is more preferably 1 g to 45 g/10 minutes. By using such a butene-based resin (b2), extrusion moldability of a film is improved.

In addition, the density of the butene-based resin (b2) is preferably 0.88 g/cm³ to 0.93 g/cm³, and is more preferably 0.88 g/cm³ to 0.92 g/cm³. By using such a butene-based resin, it is possible to achieve a preferred sealing strength.

In the interlayer (B), the content of the ethylene-based resin (b1) in the resin component contained in the interlayer (B) is 50 mass% to 80 mass%, is preferably 55 mass% to 75 mass%, and is more preferably 60 mass% to 70 mass%. In addition, the content of the butene-based resin (b2) of the ethylene-based resin (b1) in the resin component contained in the interlayer (B) is 20 mass% to 50 mass%, is preferably 25 mass% to 45 mass%, and is more preferably 30 mass% to 40 mass%. By setting the content of the ethylene-based resin (b1) and the butene-based resin (b2) to be within the range described above, a suitable sealing strength is obtained, and thus, it is possible to achieve preferred easy peelability without causing a film residue or flaking.

In the interlayer (B), other resins may be used in addition to the ethylene-based resin (b1) and the butene-based resin (b2) described above, within a range not impairing the effects of the invention. An ethylene-based resin other than the ethylene-based resin (b1), a propylene-based resin, and the like can be used as the other resins. The ethylene-based resin, the propylene-based resin, or the like exemplified in the heat-seal layer (A) described above can be used as the ethylene-based resin or the propylene-based resin.

In the case of using the other resins as described above, the content of the other resins in the resin component contained in the interlayer (B) is preferably 30 mass% or less, is more preferably 20 mass% or less, and is more preferably 10 mass% or less. In addition, a lower limit is not particularly limited, but the other resins may be suitably used at a content of 1 mass% or more, in accordance with desired properties.

In the interlayer (B), various additives may be blended within a range not impairing the effects of the invention. An antioxidant, a weathering stabilizer, an antistatic agent, an anti-fogging agent, an anti-blocking agent, a lubricant, a nucleating agent, a pigment, and the like can be exemplified as the additive.

### [Surface layer (C)]

The surface layer (C) of the easily unsealable laminate film of the invention is a layer that is a superficial layer on a side opposite to the heat-seal layer (A) described above. In the surface layer (C), a preferred configuration may be suitably adopted in accordance with a packaging form to be used, and in a case where the surface layer (C) is laminated with a resin container or a resin film, it is preferable to use the surface layer (C) containing a polyolefin-based resin as a main resin component.

The ethylene-based resin, the propylene-based resin, or the like exemplified in the heat-seal layer (A) described above can be suitably used as the polyolefin-based resin used in the surface layer (C). In particular, the ethylene-based resin can be preferably used from the viewpoint of easily obtaining cohesiveness with respect to the other layers. In particular, in a case where the surface layer (C) is laminated with a PET container or a PET film, it is preferable to use ultralow-density polyethylene (VLDPE), linear low-density polyethylene (LLDPE), low-density polyethylene (LDPE), linear medium-density polyethylene (LMDPE), and the like, and it is particularly preferable to use linear low-density polyethylene (LLDPE) and linear medium-density polyethylene (LMDPE) .

In the surface layer (C), the content of the polyolefin-based resin with respect to the total amount of the resin component forming the layer is preferably 60 mass% or more, is more preferably 80 mass% or more, and is even more preferably 90 mass% or more, from the viewpoint of easily obtaining a preferred mechanical strength, film formability, and extrusion adequacy. In particular, only the polyolefin-based resin is contained as the resin component, and in the resin component, the content of the ethylene-based resin is preferably 60 mass% or more, is more preferably 80 mass% or more, and is even more preferably 90 mass% or more.

The MFR of the ethylene-based resin used in the surface layer (C) is preferably 0.1 g to 50 g/10 minutes (190°C and 21.18 N), and is more preferably 4 g to 20 g/10 minutes. By using such an ethylene-based resin, extrusion moldability is improved.

The density of the ethylene-based resin used in the surface layer (C) is preferably 0.92 g/cm³ to 0.945 g/cm³, and is more preferably 0.925 g/cm³ to 0.940 g/cm³. By using such an ethylene-based resin, a mechanical strength is improved.

For example, a polyolefin-based resin and the like other than the ethylene-based resin described above can be exemplified, and a propylene-based resin such as propylene homopolymer, a propylene-ethylene copolymer, a propylene-butene-1 copolymer, a propylene-ethylene-butene-1 copolymer, and metallocene catalyst-based polypropylene can be exemplified, as resins used in the surface layer (C), other than the ethylene-based resin.

In the case of using the other resins as described above, the content of the other resins in the resin component contained in the surface layer (C) is preferably 40 mass% or less, is more preferably 20 mass% or less, and is more preferably 10 mass% or less. In addition, a lower limit is not particularly limited, but the other resins may be suitably used at a content of 1 mass% or more, in accordance with desired properties.

In addition, the MFR of the resin composition in which the resin used in the surface layer (C) is blended is preferably 0.1 g to 50 g/10 minutes (190°C and 21.18 N), and is more preferably 4 g to 20 g/10 minutes. It is preferable that the MFR is within the range described above since excellent film formability can be obtained in various multi-layer formation methods.

In the surface layer (C), various additives may be blended within a range not impairing the effects of the invention. An antioxidant, a weathering stabilizer, an antistatic agent, an anti-fogging agent, an anti-blocking agent, a lubricant, a nucleating agent, a pigment, and the like can be exemplified as the additive.

### [Easily Unsealable Laminate Film]

The easily unsealable laminate film of the invention is a laminate film in which one superficial layer is the heat-seal layer (A) described above, and the other superficial layer is the surface layer (C) described above, and the interlayer (B) described above is laminated on the heat-seal layer (A) between the heat-seal layer (A) and the surface layer (C). According to such a configuration, in the easily unsealable laminate film of the invention, the heat-seal layer (A) and the resin-based nonwoven fabric preferably adhere to each other, and preferred easy peelability of the interlayer (B) can be achieved.

A configuration of heat-seal layer (A)/interlayer (B)/surface layer (C) can be preferably exemplified as a layer configuration of the easily unsealable laminate film of the invention. In addition, within a range not impairing the effects of the invention, a configuration in which the surface layer (C) has a two-layer configuration, a configuration in which an arbitrary function layer such as a barrier layer or an easily adhesive layer is provided between the interlayer (B) and the surface layer (C), and the like may be used.

The thickness of the easily unsealable laminate film of the invention may be suitably adjusted in accordance with an application or a form to be used, and the total thickness is preferably 15 µm to 70 µm, and is more preferably 20 µm to 50 µm, from the viewpoint of obtaining excellent heat-sealing properties.

In addition, the thickness or the thickness ratio of each of the layers is not particularly limited, and for example, the thickness of the heat-seal layer (A) is preferably 2 µm to 15 µm, and is more preferably 3 µm to 10 µm. Accordingly, preferred sealing properties and an effect of preventing flaking are easily obtained. The thickness of the interlayer is preferably 2 µm to 13 µm, and is more preferably 3 µm to 10 µm. Accordingly, a preferred sealing strength is exhibited, and an effect of preventing a film residue or cobwebbing and flaking is easily obtained. The thickness of the surface layer is preferably 7 µm to 65 µm, and is more preferably 10 µm to 25 µm. Accordingly, preferred extrusion moldability and mechanical properties are easily obtained.

### [Manufacturing Method of Easily Unsealable Laminate Film]

A manufacturing method of the easily unsealable laminate film of the invention is not particularly limited, and examples of the manufacturing method include a coextrusion method in which each of the resins or a resin mixture used in each of the layers such as the heat-seal layer, the interlayer, and the surface layer is heated and melted by a separate extruder, and heat-seal layer/interlayer/surface layer are laminated in a melted state by a method such as a coextrusion multi-layer dicing method or a feed blocking method, and then, are molded into the shape of a film by inflation, a T die and chill roll method, or the like. The coextrusion method is preferable since in the coextrusion method, it is possible to comparatively freely adjust the thickness ratio of each of the layers, and to obtain a laminate film that is excellent in hygienic properties, and is also excellent in cost performance. In a case where a resin having a large difference between a melting point and Tg is laminated, there is a case where a film appearance is degraded at the time of coextrusion processing, or it is difficult to form a uniform layer configuration. In order to suppress such degradation, the T die and chill roll method in which it is possible to perform melting extrusion at a comparatively high temperature is preferable.

Further, in a case where printing is performed with respect to the surface layer, in a case where the surface layer is laminated with a packaging container, or the like, it is preferable that a surface treatment is performed with respect to the surface layer. Examples of such a surface treatment include a surface oxidization treatment such as a corona treatment, a plasma treatment, a chromic acid treatment, a flame treatment, a hot air treatment, and an ozone and ultraviolet ray treatment, and a surface roughening treatment such as sand blast, and the corona treatment is preferable.

### [Packaging Container]

The heat-seal layer (A) and the resin-based nonwoven fabric adhere to each other, and thus, the easily unsealable laminate film of the invention forms a packaging container. For example, a packaging container obtained by laminating the surface layer (C) of the easily unsealable laminate film of the invention on an opening portion side of a container including an opening portion, filling the container with a content, and then, performing heat-sealing with respect to the heat-seal layer (A) of the easily unsealable laminate film and the resin-based nonwoven fabric can be exemplified as a specific configuration.

A resin-based nonwoven fabric that is less likely to cause dust compared to paper can be preferably used as the resin-based nonwoven fabric used in the invention, and for example, polyethylene-based nonwoven fabric, (for example, "Tyvek", manufactured by DuPont-Asahi Flash Spun Products Co., Ltd.), a single fiber containing a polyethylene-based resin, a microporous film in which a fiber containing a polyethylene-based resin and other materials such as paper and pulp are mixed (for example, "Medica", manufactured by Oji Specialty Paper Co., Ltd.), and the like can be used. In particular, the polyethylene-based nonwoven fabric is preferable since preferred air permeability and an excellent tear strength or an excellent piercing strength are easily achieved. The polyethylene-based nonwoven fabric is particularly preferable for a packaging application of a medical device or the like since sterilization is simply and easily performed, and a package is less likely to be damaged by an acute medical device.

An interlayer Elmendorf tear strength (ASTM D1424 EN21974) of the resin-based nonwoven fabric is preferably 2 N or more, and is more preferably 2.5 N or more, from the viewpoint of easily obtaining preferred air permeability or easy peelability. In addition, an upper limit is not particularly limited, but it is preferable that the upper limit is approximately 5 N or less.

A tensile strength (ASTM D5035EN ISO 1924-2) of the resin-based nonwoven fabric is preferably 120 N/2.54 cm or more, is more preferably 130 N/2.54 cm or more, and is even more preferably 150 N/2.54 cm or more, from the viewpoint of easily obtaining both of preferred air permeability and easy peelability. In addition, an upper limit is not particularly limited, but it is preferable that the upper limit is 500 N/2.54 cm or less, and it is preferable that the upper limit is 300 N/2.54 cm or less. In addition, in a case where the tensile strength is 165 N/2.54 cm or less, there is a tendency that flaking is slightly likely to occur, but according to the laminate film of the invention, it is possible to achieve preferred easy peelability even in the resin-based nonwoven fabric. Furthermore, a low numerical value of the tensile strength that is measured in an MD direction and a CD direction may be within the range described above.

Gurley permeability (ISO5636-5) is preferably 5 sec/100 cc or more, is more preferably 6 sec/100 cc or more, and is even more preferably 8 sec/100 cc or more, as air permeability of the resin-based nonwoven fabric, from the viewpoint of easily ensuring simple sterilization properties. In addition, an upper limit is not particularly limited, but it is preferable that the upper limit is 100 sec/100 cc or less, and it is more preferable that the upper limit is 50 sec/100 cc or less.

Basis weight is preferably 30 g/m² to 100 g/m², is more preferably 40 g/m² to 90 g/m², and is even more preferably 50 g/m² to 80 g/m², as the thickness of the resin-based nonwoven fabric, from the viewpoint of easily ensuring easy peelability at the time of opening.

The container sealed with the resin-based nonwoven fabric is not particularly limited, but various containers that are used in packaging of a medical device, sanitary goods, or the like can be suitably used. For example, a resin container using a resin such as PET and PP can be preferably used as the container.

A lamination of the resin container and the easily unsealable laminate film of the invention may be performed by an arbitrary method, and in the case of a resin container including an opening portion, a method of forming the resin container including the opening portion, and then, providing the easily unsealable laminate film of the invention in a range including the opening portion, a method of laminating the easily unsealable laminate film of the invention on a resin sheet or the like forming the resin container, and then, obtaining the resin container in which the easily unsealable laminate film of the invention is provided in the opening portion by punching and molding the laminated sheet, and the like can be used.

The packaging container in which the resin container and the resin-based nonwoven fabric are laminated through the easily unsealable laminate film of the invention has preferred peelability that does not cause flaking, cobwebbing, or the like at the time of opening while having air permeability that achieves simple and easy sterilization. For this reason, the packaging container is particularly preferable for a packaging application of medical equipment or sanitary goods in which sterilization is required, and the incorporation of impurities is required to be maximally suppressed.

The packaging material may be subjected to a sterilization treatment such as an electron beam, a γ ray, ethylene oxide (EOG), and an autoclave treatment. Examples

### (Example 1)

The following resins were used as the resin components for forming the heat-seal layer (A), the interlayer (B), and the surface layer (C), extrusion was performed from a T die at an extrusion temperature of 250°C by a coextrusion method such that the thicknesses of surface layer (C)/interlayer (B)/heat-seal layer (A) were 15 µm/5 µm/10 µm, cooling was performed by a water-cooling metal cooling roll at 40°C, a corona discharge treatment was performed such that a wet tension of the surface layer (C) was 40 mN/m, and then, winding on a roll was performed, aging was performed in an aging chamber at 40°C for 24 hours, and thus, a laminate film having a total thickness of 30 µm was obtained.

Surface layer (C): 100 parts by mass of linear low-density polyethylene (a density of 0.93 g/cm³ and an MFR (190°C) of 4 g/10 min) (hereinafter, referred to as LLDPE (1))

Interlayer (B): a resin mixture of 75 parts by mass of low-density polyethylene (a density of 0.92 g/cm³ and an MFR (190°C) of 35 g/10 min) (hereinafter, referred to as LDPE (1)) and 25 parts by mass of a butene-based resin (a density of 0.91 g/cm³ and an MFR (190°C) of 4 g/10 min) (hereinafter, referred to as a butene-based resin (1))

Heat-seal layer (A): 100 parts by mass of the LDPE (1)

### (Example 2)

A laminate film was obtained as in Example 1, except that the resin component used in the interlayer (B) was changed as described below.

Interlayer (B): 70 parts by mass of the LDPE (1) and 30 parts by mass of the butene-based resin (1)

### (Example 3)

A laminate film was obtained as in Example 1, except that the resin component used in the interlayer (B) was changed as described below.

Interlayer (B): 60 parts by mass of the LDPE (1) and 40 parts by mass of the butene-based resin (1)

### (Example 4)

A laminate film was obtained as in Example 1, except that the resin component used in the interlayer (B) was changed as described below.

Interlayer (B): 55 parts by mass of the LDPE (1) and 45 parts by mass of the butene-based resin (1)

### (Example 5)

A laminate film was obtained as in Example 3, except that the resin component used in the interlayer (B) was changed as described below.

Interlayer (B): 60 parts by mass of low-density polyethylene (a density of 0.92 g/cm³ and an MFR (190°C) of 5 g/10 min) (hereinafter, referred to as LDPE (2)) and 40 parts by mass of the butene-based resin (1)

### (Example 6)

A laminate film was obtained as in Example 3, except that the resin component used in the interlayer (B) was changed as described below.

Interlayer (B): 60 parts by mass of low-density polyethylene (a density of 0.92 g/cm³ and an MFR (190°C) of 7 g/10 min) (hereinafter, referred to as LDPE (3)) and 40 parts by mass of the butene-based resin (1)

### (Example 7)

A laminate film was obtained as in Example 3, except that the resin component used in the interlayer (B) was changed as described below.

Interlayer (B): 60 parts by mass of low-density polyethylene (a density of 0.92 g/cm³ and an MFR (190°C) of 50 g/10 min) (hereinafter, referred to as LDPE (4)) and 40 parts by mass of the butene-based resin (1)

### (Example 8)

A laminate film was obtained as in Example 6, except that the resin component used in the heat-seal layer (A) was changed as described below.

Heat-seal layer (A): 100 parts by mass of the LDPE (2)

### (Example 9)

A laminate film was obtained as in Example 6, except that the resin component used in the heat-seal layer (A) was changed as described below.

Heat-seal layer (A): 100 parts by mass of the LDPE (3)

### (Example 10)

A laminate film was obtained as in Example 6, except that the resin component used in the heat-seal layer (A) was changed as described below.

Heat-seal layer (A): 100 parts by mass of the LDPE (4)

### (Example 11)

A laminate film was obtained as in Example 3, except that the thicknesses of surface layer (C) /interlayer (B) /heat-seal layer (A) were 18 µm/3 µm/3 µm, and the total thickness was 24 µm.

### (Example 12)

A laminate film was obtained as in Example 3, except that the thicknesses of surface layer (C) /interlayer (B) /heat-seal layer (A) were 20 µm/10 µm/10 µm, and the total thickness was 40 µm.

### (Example 13)

A laminate film was obtained as in Example 3, except that the resin component used in the heat-seal layer (A) was changed as described below.

Heat-seal layer (A) 95 parts by mass of the LDPE (1) and 5 parts by mass of the butene-based resin (1)

### (Comparative Example 1)

A laminate film was obtained as in Example 1, except that the resin component used in the interlayer (B) was changed as described below.

Interlayer (B): 90 parts by mass of the LDPE (1) and 10 parts by mass of the butene-based resin (1)

### (Comparative Example 2)

A laminate film was obtained as in Example 1, except that the resin component used in the interlayer (B) was changed as described below.

Interlayer (B): 40 parts by mass of the LDPE (1) and 60 parts by mass of the butene-based resin (1)

### (Comparative Example 3)

A laminate film was obtained as in Example 1, except that the resin component used in the interlayer (B) was changed as described below.

Interlayer (B): 60 parts by mass of low-density polyethylene (a density of 0.92 g/cm³ and an MFR (190°C) of 0.5 g/10 min) (hereinafter, referred to as LDPE (5)) and 40 parts by mass of the butene-based resin (1)

### (Comparative Example 4)

A laminate film was obtained as in Example 1, except that the following resins were used as the resin components for forming the layers, and extrusion was performed from a T die at an extrusion temperature of 250°C by a coextrusion method such that the thicknesses of surface layer/heat-seal layer were 27 µm/3 µm.

Surface layer: 100 parts by mass of the LLDPE (1)

Heat-Seal layer: 100 parts by mass of an ethylene-methyl acrylate copolymer (a density of 0.94 g/cm³ and an MFR (190°C) of 2.6 g/10 min) (hereinafter, referred to as EMA (1))

### (Comparative Example 5)

A laminate film was obtained as in Example 1, except that the resin components used in the heat-seal layer (A) and the interlayer (B) were changed as described below.

Interlayer (B): 85 parts by mass of the LDPE (3) and 15 parts by mass of the butene-based resin (1)

Heat-seal layer (A): 90 parts by mass of the LDPE (1) and 10 parts by mass of the butene-based resin (1)

The following evaluation was performed with respect to the films obtained in the examples and the comparative examples described above. The obtained results are as shown in the following tables.

### (Preparation of Laminate Film)

A biaxially stretched polyethylene terephthalate (PET) film (a thickness of 50 µm) was bonded to the surface of the laminate film obtained in each of the examples and the comparative examples described above on a surface layer side thereof by dry lamination, and thus, a laminate film was obtained. At this time, a two-part curing type adhesive agent manufactured by DIC Corporation (a polyester-based adhesive agent of "LX500" and a curing agent of "KW-75") was used as an adhesive agent for dry lamination.

### (Evaluation of Heat-Sealing Properties)

The heat-seal surface of the laminate film obtained as described above and a seal surface of a non-coat type polyethylene-based nonwoven fabric ("Tyvek", manufactured by DuPont-Asahi Flash Spun Products Co., Ltd.) (basis weight of 59.5 g/m², a Gurley permeability of 25 sec/100 cc, and a tensile strength of (MD) 156 N/2.54 cm and (MD) 160 N/2.54 cm, and an Elmendorf tear strength of (MD) 2.7 N and (CD) 3.5 N) were overlapped each other, and heat-sealing was performed from the polyethylene-based nonwoven fabric side in a condition of a heat-sealing temperature of 130°C, a sealing pressure of 0.5 MPa, and a sealing time of 5 seconds. Next, the film subjected to the heat-sealing was naturally cooled at 23°C. The film was cut into the shape of reed having a width of 15 mm and was set to a test piece, and the test piece was peeled off at a velocity of 300 mm/minute and an angle of 90° by using a tensile tester (manufactured by A&D Company, Limited) in a constant temperature chamber of 23°C and 50%RH, and thus, a heat-sealing strength was measured.

⊙: The heat-sealing strength is 3.5 N to 5.5 N/15 mm.

○: The heat-sealing strength is 3 N to 6.5 N/15 mm.

×: The heat-sealing strength is less than 3 N/15 mm or more than 6 N/15 mm.

### (Evaluation of Film Residue and Cobwebbing)

As with the case of measuring the heat-sealing strength described above, the laminate film obtained as described above and the polyethylene-based nonwoven fabric were subjected to heat-sealing, and were naturally cooled. The laminated film and the polyethylene-based nonwoven fabric were cut such that a heat-seal portion had a size of 10 mm × 100 mm and were set to a test piece, the laminate film and the polyethylene-based nonwoven fabric were peeled off by hands in a constant temperature chamber of 23°C and 50%RH, and the appearance of the seal portion of the laminate film and the polyethylene-based nonwoven fabric after peeling was visually observed, and thus, the film residue and the cobwebbing, and the flaking were evaluated on the basis of the following standards, as the evaluation of a peeling appearance.

○: None of the film residue and the cobwebbing occurs.

×: At least one of the film residue and the cobwebbing occurs.

### (Evaluation of Flaking Properties)

The flaking was evaluated on the basis of the following standards, by using the test piece of which the film residue and the cobwebbing were evaluated as described above.

○: There is no flaking.

×: There is flaking.

**[Table 1]**

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Composition of resin layer (parts by mass) | Surface layer (C) | LLDPE (1) | 100 | 100 | 100 | 100 | 100 | 100 | 100 | 100 | 100 | 100 |
| | Interlayer (B) | LDPE (1) <MFR35> | 75 | 70 | 60 | 55 | | | | | | |
| | | LDPE (2) <MFR5> | | | | | 60 | | | | | |
| | | LDPE (3) <MFR7> | | | | | | 60 | | 60 | 60 | 60 |
| | | LDPE (4) <MFR50> | | | | | | | 60 | | | |
| | | Butene-based resin (1) | 25 | 30 | 40 | 45 | 40 | 40 | 40 | 40 | 40 | 40 |
| | Heat-seal layer (A) | LDPE (1) <MFR35> | 100 | 100 | 100 | 100 | 100 | 100 | 100 | | | |
| | | LDPE (2) <MFR5> | | | | | | | | 100 | | |
| | | LDPE (3) <MFR7> | | | | | | | | | 100 | |
| | | LDPE (4) <MFR50> | | | | | | | | | | 100 |
| Layer configuration of film | Thickness of surface layer (C) (µm) | | 15 | 15 | 15 | 15 | 15 | 15 | 15 | 15 | 15 | 15 |
| | Thickness of interlayer (B) (µm) | | 5 | 5 | 5 | 5 | 5 | 5 | 5 | 5 | 5 | 5 |
| | Thickness of heat-seal layer (A) (µm) | | 10 | 10 | 10 | 10 | 10 | 10 | 10 | 10 | 10 | 10 |
| | Total thickness of film (µm) | | 30 | 30 | 30 | 30 | 30 | 30 | 30 | 30 | 30 | 30 |
| Evaluation result | Heat-sealing properties | | ⊙ | ⊙ | ⊙ | ⊙ | ○ | ⊙ | ○ | ○ | ⊙ | ○ |
| | Film residue and cobwebbing | | ○ | ○ | ○ | ○ | ○ | ○ | ○ | ○ | ○ | ○ |
| | Flaking properties | | ○ | ○ | ○ | ○ | ○ | ○ | ○ | ○ | ○ | ○ |

**[Table 2]**

| | | | Example | | | Comparative Example | | | | |
|---|---|---|---|---|---|---|---|---|---|---|
| | | | 11 | 12 | 13 | 1 | 2 | 3 | 4 | 5 |
| Composition of resin layer (parts by mass) | Surface layer (C) | LLDPE (1) | 100 | 100 | 100 | 100 | 100 | 100 | 100 | 100 |
| | Interlayer (B) | LDPE (1) <MFR35> | 60 | 60 | 60 | 90 | 40 | | | |
| | | LDPE (3) <MFR7> | | | | | | | | 85 |
| | | LDPE (5) <MFR0.5> | | | | | | 60 | | |
| | | Butene-based resin (1) | 40 | 40 | 40 | 10 | 60 | 40 | | 15 |
| | Heat-seal layer (A) | LDPE (1) <MFR35> | 100 | 100 | 95 | 100 | 100 | 100 | | 90 |
| | | EMA (1) <MFR2. 6> | | | | | | | 100 | |
| | | Butene-based resin (1) | | | 5 | | | | | 10 |
| Layer configuration of film | Thickness of surface layer (C) (µm) | | 18 | 20 | 15 | 15 | 15 | 15 | 27 | 15 |
| | Thickness of interlayer (B) (µm) | | 3 | 10 | 5 | 5 | 5 | 5 | 0 | 5 |
| | Thickness of heat-seal layer (A) (µm) | | 3 | 10 | 10 | 10 | 10 | 10 | 3 | 10 |
| | Total thickness of film (µm) | | 24 | 40 | 30 | 30 | 30 | 30 | 30 | 30 |
| Evaluation result | Heat-sealing properties | | ⊙ | ⊙ | ⊙ | × | × | × | × | × |
| | Film residue and cobwebbing | | ○ | ○ | ○ | ○ | × | × | ○ | ○ |
| | Flaking properties | | ○ | ○ | ○ | × | ○ | ○ | ○ | × |

When the laminate film of each of Examples 1 to 13 according to the invention was used as a sealant film and heat-sealed with the polyethylene-based nonwoven fabric, a suitable heat-sealing strength was obtained, excellent heat-sealing properties were kept, smooth peeling was possible, and the peeling appearance was excellent without any film residue or cobwebbing, or any flaking in the seal portion after peeling.

The laminate film of Comparative Example 1 was an example of a laminate film in which the content ratio of the butene-based resin in the interlayer (B) was less than 20 mass%, but the coagulation force of the interlayer (B) was high, and the sealing strength was excessively high, and thus, there was the flaking in the seal portion after peeling, and the peeling appearance was impaired.

The laminate film of Comparative Example 2 was an example of a laminate film in which the content ratio of the butene-based resin in the interlayer (B) was more than 50 mass%, but the coagulation force of the interlayer (B) was low, and the sealing strength was excessively low, and thus, there was the film residue or the cobwebbing in the seal portion after peeling, and the peeling appearance was impaired.

The laminate film of Comparative Example 3 was an example of a laminate film in which the olefin-based resin of the interlayer (B) was linear low-density polyethylene (LLDPE) having an MFR (190°C) of less than 5 g/10 min, but the coagulation force of the interlayer (B) was low, and the sealing strength was excessively low, and thus, there was the film residue or the cobwebbing in the seal portion after peeling, and the peeling appearance was impaired.

The laminate film of Comparative Example 4 was an example of a laminate film in which the interlayer (B) containing the ethylene-based resin and the butene-based resin as a resin component was not provided, and the heat-seal layer having interface peelability with respect to the nonwoven fabric was provided, but the sealing strength was insufficient.

The laminate film of Comparative Example 5 was an example of a laminate film in which the content ratio of the butene-based resin in the interlayer (B) was less than 20 mass%, and the heat-seal layer (A) containing the ethylene-based resin and the butene-based resin as a resin component was provided, but the coagulation force of the interlayer (B) was excessively high, and thus, there was the flaking in the seal portion after peeling, and the peeling appearance was impaired.

## Claims

1. An easily unsealable laminate film for use in bonding of a resin-based nonwoven fabric, comprising:
a heat-seal layer (A) as one superficial layer to be bonded to the resin-based nonwoven fabric;
an interlayer (B) that is laminated on the heat-seal layer (A) and includes, as resin components, an ethylene-based resin (b1) with a melt flow rate of 5 g to 50 g/10 min at 190°C and a butene-based resin (b2); and
a surface layer (C) as another superficial layer, wherein
the resin components in the interlayer (B) have an ethylene-based resin (b1) content of 50 mass% to 80 mass% and a butene-based resin (b2) content of 20 mass% to 50 mass%.

2. The easily unsealable laminate film according to claim 1, wherein
the heat-seal layer (A) and the surface layer (C) are each a layer containing an olefin-based resin as a main resin component.

3. The easily unsealable laminate film according to claim 1, wherein
the heat-seal layer (A) is a layer containing an olefin-based resin with a melt flow rate of 5 g to 50 g/10 min as a main resin component.

4. The easily unsealable laminate film according to any one of claims 1 to 3, wherein
the resin-based nonwoven fabric is a polyethylene-based nonwoven fabric.

5. A packaging container comprising a resin container and a resin-based nonwoven fabric laminated with the easily unsealable laminate film according to any one of claims 1 to 3 interposed therebetween.
